(19) Europäisches Patentamt
European Patent Office
Office européen des brevets

(11) EP 4 448 321 B1

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **22822385.5**

(22) Anmeldetag: **25.11.2022**

(51) Internationale Patentklassifikation (IPC):
***B60L 3/10*** *(2006.01)* ***B60L 7/26*** *(2006.01)*
***B60T 8/172*** *(2006.01)* ***B60T 13/08*** *(2006.01)*
***B62D 59/04*** *(2006.01)* ***B60L 15/38*** *(2006.01)*
***B60T 8/17*** *(2006.01)* ***B60T 7/20*** *(2006.01)*
***B60L 15/20*** *(2006.01)*

(52) Gemeinsame Patentklassifikation (CPC):
**B60L 3/108; B60L 7/26; B60L 15/2009;**
**B60L 15/38; B60T 7/20; B60T 8/1708; B62D 59/04;**
B60L 2200/28; B60L 2240/14; B60L 2240/24;
B60L 2240/26; B60L 2240/465; B60T 2250/02

(86) Internationale Anmeldenummer:
**PCT/EP2022/083215**

(87) Internationale Veröffentlichungsnummer:
**WO 2023/110358 (22.06.2023 Gazette 2023/25)**

(54) **VERFAHREN ZUM BETREIBEN EINES ANHÄNGERFAHRZEUGS MIT EINEM ELEKTRISCHEN ANTRIEB UND MIT REIBBREMSEN SOWIE ANHÄNGERBREMSSTEUERGERÄT UND ANHÄNGERFAHRZEUG ZUM AUSFÜHREN DES VERFAHRENS**

OPERATING METHOD FOR A TRAILER VEHICLE WITH ELECTRIC DRIVE AND FRICTION BRAKES, TRAILER BRAKES CONTROL DEVICE AND TRAILER VEHICLE FOR PERFORMING THE METHOD

PROCÉDÉ DE FONCTIONNEMENT D’UN VÉHICULE À REMORQUE AVEC ENTRAÎNEMENT ÉLECTRIQUE ET FREINS À FROTTEMENT, DISPOSITIF DE CONTRÔLE DES FREINS À REMORQUE ET VÉHICULE À REMORQUE À EXÉCUTER LE PROCÉDÉ

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.12.2021 DE 102021133759**

(43) Veröffentlichungstag der Anmeldung:
**23.10.2024 Patentblatt 2024/43**

(73) Patentinhaber: **ZF CV Systems Global GmbH**
**3006 Bern (CH)**

(72) Erfinder:
- **HESEDING, Johannes**
**30499 Hannover (DE)**
- **MÜLLER-DEILE, Felix**
**30449 Hannover (DE)**
- **RODENBERG, Alexander**
**38102 Braunschweig (DE)**
- **SCHOMBURG, Michael**
**30890 Barsinghausen (DE)**

(74) Vertreter: **Ohlendorf, Henrike**
**ZF CV Systems Hannover GmbH**
**Am Lindener Hafen 21**
**30453 Hannover (DE)**

(56) Entgegenhaltungen:
**EP-A1- 2 172 378** **EP-A1- 3 381 774**
**DE-A1- 102019 119 786** **DE-A1- 102020 108 391**
**GB-A- 2 565 851** **US-A1- 2018 236 994**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 448 321 B1

**Beschreibung**

Die Erfindung betrifft den Bereich der Nutzfahrzeuge und hierbei Anhängerfahrzeuge oder kurz Anhänger, die als Nutzfahrzeuge ausgebildet sind. Ein als Nutzfahrzeug ausgebildetes Anhängerfahrzeug wird durch ein Zugfahrzeug, das beispielsweise ebenfalls als Nutzfahrzeug ausgebildet ist, gezogen. Solche hier bezeichneten Anhängerfahrzeuge sind insbesondere Sattelauflieger und Deichselanhänger.

Gemäß dem Stand der Technik sind Nutzfahrzeuge, die als Zugfahrzeuge ausgebildet sind, vornehmlich mit einem Verbrennungsmotor ausgestattet, um das Zugfahrzeug anzutreiben und ggf. ein Anhängerfahrzeug zu ziehen. Die genannten Nutzfahrzeuge werden gemäß dem Stand der Technik immer häufiger mit einem elektrischen Antrieb ausgestattet. Demnach kann ein elektrischer Antrieb zusätzlich zum Verbrennungsmotor im Zugfahrzeug vorgesehen sein, so dass das Zugfahrzeug als Hybridfahrzeug ausgebildet ist. Es ist außerdem auch bekannt, dass ein elektrischer Antrieb im Anhängerfahrzeug angeordnet ist, um ein Hybridgespann aus Zugfahrzeug und Anhängerfahrzeug zu bilden.

Unabhängig davon, ob ein elektrischer Antrieb im Zugfahrzeug, im Anhängerfahrzeug oder in beiden Fahrzeugen eines Gespanns angeordnet ist, dient der elektrische Antrieb vornehmlich zur Unterstützung des Verbrennungsmotors, nämlich, um den Verbrennungsmotor des Zugfahrzeugs in einem energieeffizienten Drehzahlbereich betreiben zu können oder zusätzlichen Schub, beispielsweise beim Anfahren oder beim Bergauffahren bereitzustellen. Außerdem kann mit dem elektrischen Antrieb kinetische und potenzielle Energie des Gespanns, beispielsweise beim Bremsen, zurückgewonnen und als elektrische Energie in einem oder mehreren Energiespeichern gespeichert werden. Diese Energie kann bei Bedarf wieder für den Vortrieb zur Verfügung gestellt werden.

So dient ein elektrischer Antrieb auch zur Unterstützung oder vollständigen Umsetzung einer geforderten negativen Beschleunigung, nämlich zum Bremsen. In besonders vorteilhafter Weise werden so Reibbremsen des Zugfahrzeugs und des Anhängerfahrzeugs geschont.

Elektrische Antriebe im Anhängerfahrzeug führen gegenüber Anhängerfahrzeugen ohne elektrischen Antrieb jedoch neben den auf den elektrischen Antrieb direkt zurückführenden Änderungen eines Verhaltens auch zu einem sich insgesamt verändernden Verhalten des Anhängerfahrzeugs, insbesondere beim Bremsen. Ein elektrischer Antrieb, der bei Anhängerfahrzeugen üblicherweise nur auf eine Achse wirkt, führt nämlich zu einem Zusatzgewicht durch den elektrischen Antrieb, das im Wesentlichen im Bereich der elektrisch angetriebenen Achse angeordnet ist. Trotz einer üblicherweise gleichmäßigen Beladung eines Anhängerfahrzeugs resultiert so ein Ungleichgewicht der auf die Räder wirkenden Massen. In Abhängigkeit von einer Bremsart, nämlich, ob ein Bremsen mit einem elektrischen Antrieb oder mit Reibbremsen oder einer Kombination erfolgt, neigen entweder Räder der angetriebenen Achse oder Räder der nicht angetriebenen Achse eher zum Blockieren als die übrigen Räder.

So wird üblicherweise der elektrische Antrieb bevorzugt zum Bremsen eingesetzt und erst bei stärkeren Bremsanforderungen die Reibbremsen mitverwendet. Da auch die elektrisch angetriebene Achse über Reibbremsen verfügt und alle Reibbremsen üblicherweise mit einem identischen Bremsdruck angesteuert werden, blockieren die Räder der angetriebenen Achse durch Aufsummieren der Bremswirkung des elektrischen Antriebs und der Reibbremsen vor den nicht angetriebenen Rädern. Aus diesem Grund ist es bekannt, bei den genannten stärkeren Bremsanforderungen das Drehmoment des elektrischen Antriebs bei Aktivierung der Reibbremsen vollständig abzuschalten und eine Verzögerung allein durch die Reibbremsen zu steuern. Wird nun durch die Reibbremsen die gleiche Bremskraft auf alle Räder ausgeübt, so blockieren die Räder, auf die eine geringere Masse wirkt, früher als die Räder, auf die eine vergleichsweise höhere Masse wirkt. Dieses Verhalten ist besonders problematisch, da Drehzahlsensoren, die ein Blockieren der Räder detektieren können, häufig aus Kostengründen und zur Reduzierung der Komplexität nicht an jedem Rad oder jeder Achse angeordnet sind. Somit wird ein Blockieren eines Rades, auf das reagiert werden muss, um die Fahrzeugstabilität zu erhalten, jedenfalls nur dann erkannt, wenn das Rad einen Sensor aufweist. Ist die Gewichtsverteilung im Anhängerfahrzeug gleichmäßig, ist dies kein Problem, da alle Räder sich ohnehin gleich oder sehr ähnlich verhalten. Ist das Gewicht durch eine Masse des elektrischen Antriebs jedoch ungleichmäßig verteilt, so würde ein blockierendes Antriebsrad, wenn nur Sensoren an der nichtangetriebenen Achse angeordnet wären, erst sehr spät erkannt werden, woraus Stabilitätsprobleme entstehen können.

DE 10 2019 119 786 A1 offenbart ein Verfahren zum Unterstützen eines Zugfahrzeugs bei Traktionsverlust durch ein Anhängerfahrzeug. Mit einem Anhängerbremssteuergerät wird ein Fahrzeugzustand des Anhängerfahrzeugs bestimmt und ein Erzeugen eines Ansteuersignals eines elektrischen Antriebs des Anhängerfahrzeugs zur Unterstützung des Zugfahrzeugs wird in Abhängigkeit einer Beschleunigungsanforderung und in Abhängigkeit des Fahrzeugzustands des Anhängerfahrzeugs erzeugt. Dabei wird zum Bestimmen des Fahrzeugzustands eine Achslast von Achsen des Anhängerfahrzeugs und/oder eine Massenverteilung im Anhängerfahrzeug bestimmt. So lassen sich, insbesondere im Falle von elektrischen Antrieben mit Einzelradantrieb, also mit mehreren elektrischen Motoren, die zum Antreiben jeweils einem einzelnen Rad zugeordnet sind, unterschiedliche Antriebsmomente in Abhängigkeit der Massenverteilung oder eines Ladezustands insgesamt erzeugen. Diese unterschiedlichen Antriebsdrehmomente würden in diesem Fall im Ansteuersignal für den elektrischen Antrieb vorgegeben werden.

EP 2 172 378 A1 offenbart ein hybrid angetriebenes Fahrzeug mit einem Verbrennungsmotor zum Antrieb einer Vorderachse des Fahrzeugs und einem elektrischen Motor zum Antrieb einer Hinterachse des Fahrzeugs und für regeneratives Bremsen an der Hinterachse. Sowohl die Vorderachse als auch die Hinterachse weist jeweils eine rechte und eine linke Radbremse in Form einer Reibbremse auf. Eine Bremskraft wird graduell von der angetriebenen Hinterachse zu der angetriebenen Vorderachse verlagert, wobei diese Verlagerung von einem Grad einer Instabilität des Fahrzeugs abhängt.

EP 3 381 774 A1 offenbart eine Dauerbremsvorrichtung für ein Fahrzeug mit einer zum rekuperativen Bremsen ausgeführten elektrischen Maschine, wobei eine Dauerbremsen-Steuereinrichtung ausgebildet ist, in Abhängigkeit von einer eingestellten Fahrzeug-Verzögerungsanforderung eine Dauerbremsen-Bremsanforderung zu bestimmen.

Aufgabe der vorliegenden Erfindung ist es daher, den Problemen des Standes der Technik zu begegnen. Insbesondere soll mit möglichst geringem zusätzlichem Aufwand bei Anhängerfahrzeugen der oben genannten Art eine Stabilität, insbesondere im Blockierfall eines der Räder, verbessert und/oder ein Verschleiß von Reifen reduziert werden. Jedenfalls ist es Aufgabe der vorliegenden Erfindung, eine Alternative zum Stand der Technik zu finden.

Hierzu betrifft die Erfindung ein Verfahren nach Anspruch 1.

Das Verfahren dient zum Betreiben eines Anhängerfahrzeugs, das einen elektrischen Antrieb und Reibbremsen aufweist. Hierbei umfasst das Verfahren zunächst das Ermitteln einer Differenzmasse zwischen einer ersten Masse der angetriebenen Achse des Anhängerfahrzeugs und einer zweiten Masse der nicht angetriebenen Achse des Anhängerfahrzeugs. Die erste Masse und die zweite Masse bezeichnen hier jeweils die Massen der entsprechenden Achse selbst, ohne eine auf die Achse wirkende Masse, beispielsweise durch ein Chassis oder eine Beladung, zu umfassen. Daraufhin wird ein Verzögerungsdrehmoment in Abhängigkeit von der Differenzmasse bestimmt und mit dem elektrischen Antrieb mindestens, insbesondere genau, das ermittelte Verzögerungsdrehmoment an der angetriebenen Achse erzeugt, wenn die Reibbremsen des Anhängerfahrzeugs aktiviert werden. Ein Aktivieren der Reibbremsen umfasst hier einerseits ein Aufbauen, aber auch ein Halten eines Bremsdrucks an den Reibbremsen. Im Gegensatz hierzu wird im Folgenden auch der Begriff Deaktivieren der Reibbremsen verwendet, der ein Ablassen eines Bremsdrucks an den Reibbremsen oder ein Zurückfahren elektronischer Aktuatoren der Reibbremsen umfasst.

Durch Ermitteln der Differenzmasse und des daraus ermittelten Verzögerungsdrehmoments, das dann mit dem elektrischen Antrieb an der angetriebenen Achse aufgebracht wird, wird eine Art Ausgleichsdrehmoment durch den elektrischen Antrieb bereitgestellt. Durch dieses Ausgleichsdrehmoment verhalten sich angetriebene und nicht angetriebene Achsen im Fall eines Auslösens der Reibbremse und einer hierdurch hervorgerufenen Schlupfänderung nahezu identisch.

Dem Verfahren liegt hierbei die Erkenntnis zugrunde, dass bei starken Bremsungen, wenn ein Antiblockiersystem eingreift, ein elektrischer Antrieb üblicherweise sein Drehmoment sofort auf null reduziert, um dem Antiblockiersystem durch Ansteuerung aller Reibbremsen eine Regelung des Bremsvorgangs ohne Einwirkung des elektrischen Antriebs zu ermöglichen, wobei üblicherweise die auf die angetriebenen Räder wirkende Masse des elektrischen Antriebs unberücksichtigt bleibt und dies zu einer nicht idealen Ansteuerung der Reibbremsen durch das Antiblockiersystem führt. Die ermittelte Differenzmasse, die einer zusätzlichen durch den elektrischen Antrieb erzeugten Masse der angetriebenen Achse gegenüber einer nicht angetriebenen Achse entspricht, dient nun zur Berücksichtigung bei einem Bremsen.

Mit der vorliegenden Erfindung ist durch das identische Verhalten aller Räder bei einer Schlupfänderung durch einen Einsatz von Reibbremsen ebenfalls der Einsatz von wenigen Drehzahlsensoren an den Rädern möglich. Eine Drehzahländerung eines Rades steht nämlich im Wesentlichen stellvertretend für eine Drehzahländerung aller Räder. Auch ist so keine individuelle Ansteuerung jeder Reibbremse jedes einzelnen Rades nötig, so dass mit den bisherigen üblicherweise zwei getrennten Ansteuerungen für die linke Anhängerfahrzeugseite und für die rechte Anhängerfahrzeugseite dennoch ein verbessertes Verhalten bei starken Bremsungen ermöglicht wird.

Gemäß einer ersten Ausführungsform wird das ermittelte Verzögerungsdrehmoment während einer von einem Antiblockiersystem erzeugten Brems- und/oder Druckhaltephase erzeugt.

Ein Antiblockiersystem, das im Folgenden kurz ABS genannt wird und gelegentlich auch als "ABS-System" bezeichnet wird, spricht üblicherweise bei einem blockierenden Rad des Anhängerfahrzeugs an. Dieses Blockieren des Rades wird durch einen Raddrehzahlsensor erkannt. Ein Blockieren wird entweder dann angenommen, wenn sich die Raddrehzahl vollständig auf null absenkt oder bereits dann, wenn sich ein Drehzahlgradient unstetig ändert.

Wurde ein blockierendes Rad detektiert, wird durch das ABS der Bremsdruck stark reduziert, um das blockierende Rad wieder freizugeben. Nach Reduzierung und somit erfolgter Freigabe des Rades wird der Bremsdruck wieder erhöht, wobei dieses Erhöhen des Bremsdrucks als Bremsphase des ABS bezeichnet werden kann. Demgegenüber kann ein Reduzieren des Bremsdrucks als Entlüftungsphase des ABS bezeichnet werden. Beim Erhöhen des Bremsdrucks wird dieser üblicherweise stufenweise angehoben und während kurzer Zeiträume konstant gehalten, um ggf. ein neues Blockieren der Räder zu erkennen. Dieses Halten des Drucks kann auch als Druckhaltephase bezeichnet werden, wobei die Druckhaltephase innerhalb der Bremsphase liegen kann. Das ermittelte Verzögerungsdrehmoment wird demnach zumindest dann erzeugt, wenn ein ABS die Radbremsen während der Brems- und/oder Druckhaltephasen aktiviert, um gerade hier, wenn nämlich die Reibbremsen angesprochen werden, ein gleiches Verhalten der Räder trotz unterschiedlichen Gewichts der Achsen zu ermöglichen.

Gemäß einer weiteren Ausführungsform wird während einer Entlüftungsphase des ABS das Verzögerungsdrehmoment reduziert und im Fall, dass eine neue Brems- und/oder Druckhaltephase vom ABS erzeugt wird, das ermittelte Verzögerungsdrehmoment wieder aufgebracht. Ein schnelles Anrollen aller Räder nach einem Blockieren, insbesondere auch ein Anrollen der Räder der angetriebenen Achse nach dem Blockieren, wird somit ermöglicht.

Gemäß einer weiteren Ausführungsform wird das Verzögerungsdrehmoment in Abhängigkeit von der Differenzmasse, der Erdbeschleunigung und einem dynamischen Reifenhalbmesser ermittelt. Der dynamische Reifenhalbmesser entspricht vorzugsweise einer Standhöhe eines belasteten Rades zwischen Aufstandsfläche und Radmitte des Rades. Dieser wird beispielsweise anhand einer Beladung des Anhängerfahrzeugs vor Fahrtbeginn ermittelt.

Das ermittelte Verzögerungsdrehmoment pro Rad ($M_{rad}$) kann durch folgende Formel bestimmt werden:

$$M_{rad} = \frac{m_{Achse}}{2} \cdot g \cdot r_{dyn}$$

$M_{rad}$ bezeichnet dabei das Drehmoment des Motors an einem Rad der angetriebenen Achse in Nm und $m_{Achse}$ die zusätzliche Masse des elektrischen Antriebs an der angetriebenen Achse in kg, also die Differenzmasse. Ferner entspricht g der Erdbeschleunigung in m/s$^2$ und $r_{dyn}$ entspricht dem dynamischen Reifenhalbmesser in m.

Gemäß einer weiteren Ausführungsform wird das Verzögerungsdrehmoment in Abhängigkeit von der Differenzmasse, der Erdbeschleunigung einem dynamischen Reifenhalbmesser sowie einer Neigung des Anhängerfahrzeugs, insbesondere einer Drehung des Anhängerfahrzeugs um eine Längsachse und/oder eine Querachse des Anhängerfahrzeugs gegenüber einer waagerechten Ausrichtung des Anhängerfahrzeugs, ermittelt.

Das ermittelte Verzögerungsdrehmoment pro Rad ($M_{rad}$) kann dabei durch folgende Formel bestimmt werden:

$$M_{rad} = \frac{m_{Achse}}{2} \cdot g \cdot \cos(\varphi) \cdot r_{dyn}$$

$M_{rad}$, $m_{Achse}$, g und $r_{dyn}$ werden wie oben verwendet. Die Größe $\varphi$ bezeichnet einen Winkel und entspricht einer Neigung des Anhängerfahrzeugs aufgrund einer Fahrbahnneigung der Fahrbahn, auf der das Anhängerfahrzeug positioniert ist. Die Neigung oder Fahrbahnneigung ist hier vorzugsweise mit einem Neigungssensor des Anhängerfahrzeugs oder einem Sensor, aus dessen Sensorsignal eine Neigung des Anhängerfahrzeugs ableitbar ist, bestimmbar.

Durch Berücksichtigung nicht nur der Differenzmasse, sondern auch optional der Neigung des Anhängerfahrzeugs, und durch Berücksichtigung des dynamischen Reifenhalbmessers, wird die Berechnung des Verzögerungsdrehmoments noch genauer bestimmbar. Somit wird ein Verhalten des Anhängerfahrzeugs bei einer starken Bremsung noch genauer beeinflusst, um so einen Verschleiß der Reifen des Anhängerfahrzeugs noch weiter zu reduzieren und eine Stabilität des Anhängerfahrzeugs zu verbessern.

Gemäß der zuvor genannten Formel ist zu unterscheiden, ob das ermittelte Verzögerungsdrehmoment für beide Räder einer Achse oder für ein Rad einer Achse ermittelt wird. Im Fall der aufgeführten Formeln ist demnach das Verzögerungsdrehmoment jeweils für eines der Räder der angetriebenen Achse bestimmt. Dies ist dann vorteilhaft, wenn der elektrische Antrieb mehrere Elektromotoren umfasst, die jeweils ein Rad antreiben. Ist demgegenüber ein Zentralachsmotor vorgesehen, der zwei oder mehr Räder antreibt, und wird das Verzögerungsdrehmoment für den Zentralachsmotor, also für zwei oder mehr Räder, bestimmt, so wird das Verzögerungsdrehmoment vorzugsweise durch eine der zuvor genannten Formeln bestimmt, wobei die Division durch zwei wegfällt.

Gemäß einer weiteren Ausführungsform wird nach Detektieren eines blockierenden Rades mit dem elektrischen Antrieb ein Vorschubmoment, insbesondere mit Beginn der Entlüftungsphase oder sogar davor, nämlich unmittelbar nach Erkennen des Blockierens, erzeugt. Das Vorschubmoment wird solange erzeugt, bis das Rad nicht mehr blockiert oder die Reibbremsen erneut aktiviert werden. Hierdurch erfolgt eine Dynamikverbesserung des Anhängerfahrzeugs, da ein Wiederanlaufen der angetriebenen Räder beschleunigt wird, beispielsweise während einer Entlüftungsphase. Eine träge Reaktion der Reibbremse, die beispielsweise nach dem Deaktivieren erst eine gewisse Zeit benötigt, bis genügend Luft abgelassen wurde, um das blockierende Rad wieder freizugeben, wird durch Erzeugen einer Kraft mit dem elektrischen Antrieb zum Wiederanlauf des Rades entgegengewirkt. Trotz eines noch vorhandenen Bremsmoments der Reibbremsen ist so ein schneller Wiederanlauf möglich.

Gemäß einer weiteren Ausführungsform des Verfahrens umfasst das Anhängerfahrzeug ein, insbesondere elektronisches, Luftfedersystem, bei dem jedes der Räder über einen Luftbalg gefedert ist. Durch eine Steuerung des Luftfedersystems lässt sich der Druck in den Luftbälgen in Abhängigkeit von einer Beladung des Anhängerfahrzeugs regeln. Gleichzeitig ist so durch Sensoren der Luftdruck in den Luftbälgen messbar, über den wiederum auf eine Masse des Anhängerfahrzeugs geschlossen werden kann. Demnach wird zur Bestimmung auf die Achsen jeweils wirkender Teilmassen der Luftdruck in den entsprechenden Luftbälgen gemessen und die Teilmassen, die auf die Achsen wirken, zu einer Gesamtmasse des Anhängerfahrzeugs aufaddiert. **In** einfacher Weise kann so die Masse des Anhängerfahrzeugs zu jeder Zeit bestimmt werden.

Gemäß einer weiteren Ausführungsform umfasst das Anhängerfahrzeug ein Anhängerbremssteuergerät. Das Anhängerbremssteuergerät empfängt vorzugsweise vom Luftfedersystem die Teilmassen, um daraus eine Gesamtmasse des Anhängerfahrzeugs zu bestimmen. Alternativ empfängt das Anhängerbremssteuergerät die vom Luftfedersystem bereits aus den Teilmassen bestimmte Gesamtmasse des Anhängerfahrzeugs. Das Anhängerbremssteuergerät dient zum Ansteuern der Reibbremsen und des elektrischen Antriebs. Demnach wird mit dem Anhängerbremssteuergerät zumindest die Differenzmasse abgerufen oder aus Daten, die dem Anhängerbremssteuergerät bereitgestellt werden, bestimmt. Insbesondere umfasst das Anhängerbremssteuergerät auch ein Antiblockiersystem. Somit lassen sich zentral in einem einzigen Steuergerät die Reibbremsen ansteuern und der elektrische Antrieb betätigen, so dass eine Koordination, insbesondere beim Eingriff durch ein Antiblockiersystem, schnell durch eine zentrale Datenverarbeitung ermöglicht wird, ohne dass eine verzögernde Datenkommunikation zwischen einzelnen Steuergeräten benötigt wird.

Außerdem betrifft die Erfindung ein Anhängerbremssteuergerät, das eingerichtet ist, das Verfahren gemäß einer der zuvor genannten Ausführungsformen auszuführen.

Gemäß einer Ausführungsform umfasst das Anhängerbremssteuergerät ein Antiblockiersystem und dient zum Ansteuern der Reibbremsen des Anhängerfahrzeugs sowie des elektrischen Antriebs des Anhängerfahrzeugs.

Außerdem betrifft die Erfindung ein Anhängerfahrzeug mit einer Ausführungsform des zuvor genannten Anhängerbremssteuergeräts.

Gemäß einer Ausführungsform umfasst das Anhängerfahrzeug einen elektrischen Antrieb und Reibbremsen.

Gemäß einer weiteren Ausführungsform umfasst das Anhängerfahrzeug ein, insbesondere elektronisches, Luftfedersystem.

Außerdem betrifft die Erfindung ein Gespann mit einer Ausführungsform des zuvor genannten Anhängerfahrzeugs und einem Zugfahrzeug.

Weitere Ausführungsformen ergeben sich anhand der in den Figuren näher erläuterten Ausführungsbeispiele. Hierbei zeigen

Figur 1 ein Gespann und

Figur 2 die Schritte des Verfahrens gemäß einem Ausführungsbeispiel.

Figur 1 zeigt ein Gespann 10 auf einer Fahrbahn 11. Das Gespann 10 umfasst ein Zugfahrzeug 12 und ein Anhängerfahrzeug 14 mit einem Bremssystem 15. Im Zugfahrzeug 12 ist ein Bremspedal 16 angeordnet, mit dem ein Bremswunsch 20 von einem Fahrer erzeugbar ist. Der Bremswunsch 20 wird an ein Bremssteuergerät (EBS) 18 des Zugfahrzeugs 12 gesendet. Der Bremswunsch 20 wird weiter vom Bremssteuergerät 18 an ein Anhängerbremssteuergerät (TEBS) 22 unverändert oder angepasst weitergeleitet. Das Anhängerbremssteuergerät 22 weist ein Antiblockiersystem 23 auf, um im Fall starker Bremsungen, bei denen die Räder 30 des Anhängerfahrzeugs 14 blockieren, den Zeitraum eines Blockierens der Räder 30 zu reduzieren.

Der Bremswunsch 20 wird demnach vom Bremssteuergerät 18 des Zugfahrzeugs 12 in einen Bremsdruck 34 zum Ansteuern von nicht dargestellten Reibbremsen des Zugfahrzeugs 12 überführt und in Abhängigkeit von der Art des Bremswunsches 20, der Bremswunsch 20 selbst oder ein Bremswunsch 20, der durch das Bremssteuergerät 18 des Zugfahrzeugs 12 für das Anhängerbremssteuergerät 22 erzeugt wird, an das Anhängerbremssteuergerät 22 des Anhängerfahrzeugs 14 übertragen. Das Anhängerbremssteuergerät 22 steuert in Abhängigkeit von dem Bremswunsch 20 einen elektrischen Antrieb 24 an, indem der Bremswunsch 20 auch an ein Steuergerät 26 des elektrischen Antriebs 24 weitergeleitet wird. In einem weiteren hier nicht dargestellten Ausführungsbeispiel, das jedoch ebenfalls von der Erfindung umfasst ist, ist das Steuergerät 26 des elektrischen Antriebs 24 Bestandteil des Anhängerbremssteuergeräts 22. In Abhängigkeit von dem Bremswunsch 20 werden außerdem Reibbremsen 28 angesteuert, die an jedem Rad 30 der Achsen 32 des Anhängerfahrzeugs 14 angeordnet sind. Dies erfolgt durch Weiterleiten eines Bremsdrucks 34 zum Ansteuern der Reibbremsen 28.

Um in Abhängigkeit vom Bremswunsch 20 eine geeignete Bremskraft in Form des Bremsdrucks 34 durch das Anhängerbremssteuergerät 22 zu erzeugen, führt ein Steuergerät 37 eines Luftfedersystems, hier dargestellt als ein elektronisches Luftfedersystem (ECAS) 38, dem Anhängerbremssteuergerät 22 Daten zu, die Teilmassen 42a, 42b, 42c entsprechen, die auf die einzelnen Achsen 32 oder die einzelnen Räder 28 des Anhängerfahrzeugs 14 wirken. Gemäß einem alternativen, in den Figuren nicht dargestellten Ausführungsbeispiel der Erfindung, sind alle Merkmale der Figur 1 umfasst, wobei abweichend von Figur 1 das Luftfedersystem 38 in das Anhängerbremssteuergerät 22 integriert ist. Somit wird alternativ auch der Balgdruck 34 direkt im Anhängerbremssteuergerät 22 gemessen und entsprechend die Teilmassen 42a, 42b, 42c im Anhängerbremssteuergerät 22 ohne eigenständiges Steuergerät 37 des Luftfedersystems 38 bestimmt.

Im Anhängerbremssteuergerät 22 kann aus diesen Teilmassen 42a, 42b, 42c eine Gesamtmasse des Anhängerfahrzeugs 14 bestimmt werden. Eine Bestimmung der Teilmassen 42a, 42b, 42c erfolgt im Steuergerät 37 des elektronischen Luftfedersystems 38, indem Druckwerte von an jedem der Räder 30 angeordneten Luftbälgen 40 gemessen und daraus die Teilmassen 42a, 42b, 42c des Anhängerfahrzeugs 14 abgeleitet werden. Gemäß einem alternativen, in den Figuren nicht dargestellten Ausführungsbeispiel, sind im Wesentlichen alle Merkmale der Fig. 1 enthalten, wobei lediglich abweichend von der Fig. 1 nur ein Sensor in einem der Luftbälge zum Messen einer Gesamtmasse vorgesehen ist.

Der elektrische Antrieb 24 weist neben dem Steuergerät 26 für den elektrischen Antrieb 24 einen Umrichter 44 auf, der in Abhängigkeit von der Steuerung mit dem Steuergerät 26 einen elektrischen Motor 46, der hier ein Zentralachsmotor ist, mit Energie aus einer Batterie 48 versorgt, um die Räder 30 der Achse 32, die mit dem elektrischen Motor 46 verbunden sind, anzutreiben. Zum Bremsen wird der Umrichter 44 so gesteuert, dass elektrische Energie in einem generatorischen Betrieb des elektrischen Motors 46 in die Batterie 48 fließt. Das Steuergerät 26 des elektrischen Antriebs erhält gemäß diesem Ausführungsbeispiel Ansteuersignale vom Anhängerbremssteuergerät 22, um den elektrischen Antrieb 24 zu betreiben. Zur Regelung des Umrichters 44 werden dem Steuergerät 26 des elektrischen Antriebs 24 Informationen 49 vom Bremssteuergerät 22 zugeführt. Das Steuergerät 26 des elektrischen Antriebs 24 oder das Anhängerbremssteuergerät 22 ermitteln auch eine Raddrehzahl der Räder 30 der elektrisch angetriebenen Achse 32 in Abhängigkeit von der Drehzahl des elektrischen Motors 46 oder in Abhängigkeit von Raddrehzahlsensoren 50, die hier nur an den nicht angetriebenen Rädern 30 dargestellt sind. Hieraus lässt sich mit dem Steuergerät 26 oder dem Anhängerbremssteuergerät 22 ein Schlupf ermitteln, so dass blockierende Räder erkannt werden können. Außerdem lässt sich mit dem Anhängerbremssteuergerät 22 ein Verzögerungsdrehmoment 54 ermitteln, um den elektrischen Antrieb 24 während der Brems- und/oder Druckhaltephasen im generatorischen Betrieb, der auch Rekuperationsbetrieb genannt wird, während einer durch das Antiblockiersystem 23 durchgeführten Bremsung zu betreiben.

Figur 2 zeigt Schritte eines Ausführungsbeispiels des Verfahrens 68. In einem Schritt 70 wird eine erste Masse 69 einer angetriebenen Achse 32 und eine zweite Masse 71 einer nicht angetriebenen Achse 32 des Anhängerfahrzeugs 14 durch das Anhängerbremssteuergerät 22 ermittelt, beispielsweise aus einem Speicher abgerufen. Anhand der ersten Masse 69 und der zweiten Masse 71 wird eine Differenzmasse 72 im Schritt 74 bestimmt. Die Differenzmasse 72 entspricht der Masse, die mehr auf die Räder 30 der mittleren in Figur 1 dargestellte Achse 32 als auf die Räder 30 der anderen Achsen 32 durch das Gewicht des elektrischen Antriebs 24, insbesondere den Elektromotor 46, wirkt. Im Schritt 75 werden weitere Werte, wie die Erdbeschleunigung 76 und der dynamische Reifenhalbmesser 78 sowie eine Neigung 80, die das Anhängerfahrzeug aufweist, abgerufen, um in diesem Schritt 75 auch das Verzögerungsdrehmoment 54 zu ermitteln.

Wird nun im Schritt 84 ein Blockieren eines der Räder 30 während eines Bremswunsches 20 detektiert, so wird im Schritt 86 eine ABS-Bremsung ausgelöst. Hierzu werden im Schritt 88 die Drücke 34 an den Reibbremsen 28 reduziert. Somit beginnt eine Entlüftungsphase 89. Im Schritt 90 wird dann, sobald die Räder 30 wieder anlaufen, mit dem elektrischen Antrieb 24 eine Bremsung mit dem Verzögerungsdrehmoment 54 erzeugt. Gleichzeitig werden im Schritt 92 die Reibbremsen 28 aktiviert. Somit beginnt eine Brems- und/oder Druckhaltephase 93. Sobald ein neues Blockieren der Räder 30 im Schritt 94 detektiert wird, wird im Schritt 96 ein Vorschubdrehmoment 97 mit dem elektrischen Antrieb 24 erzeugt und gleichzeitig werden die Reibbremsen 28 im Schritt 98 wieder gelöst. Danach folgt erneut der Schritt 90 und die nachfolgenden Schritte wiederholen sich, bis der Bremswunsch 20 vom Fahrer zurückgenommen wurde oder das Gespann 10 zum Stehen gekommen ist.

Bezugszeichenliste [Teil der Beschreibung]

| | |
|---|---|
| 10 | Gespann |
| 11 | Fahrbahn |
| 12 | Zugfahrzeug |
| 14 | Anhängerfahrzeug |
| 15 | Bremssystem |
| 16 | Bremspedal |
| 18 | Bremssteuergerät (EBS) |
| 20 | Bremswunsch |
| 22 | Anhängerbremssteuergerät (TEBS) |
| 23 | Antiblockiersystem |
| 24 | elektrischer Antrieb |
| 26 | Steuergerät |
| 28 | Reibbremsen |
| 30 | Räder |
| 32 | Achsen |
| 34 | Bremsdruck |
| 37 | Steuergerät |
| 38 | elektronisches Luftfedersystem (ECAS) |
| 40 | Luftbälge |
| 42a | Teilmasse |
| 42b | Teilmasse |
| 42c | Teilmasse |
| 44 | Umrichter |

46 elektrischer Motor
48 Batterie
49 Informationen
50 Raddrehzahlsensor
54 Verzögerungsdrehmoment
68 Verfahren
69 erste Masse
70 Empfang Teilmassen
71 zweite Masse
72 Differenzmasse
74 Bestimmung Differenzmasse
75 Abrufung weiterer Werte und Bestimmung Verzögerungsdrehmoment
76 Erdbeschleunigung
78 dynamischer Reifenhalbmesser
80 Neigung des Anhängerfahrzeugs
84 Detektion eines Blockierens der Räder
86 Auslösung ABS-Bremsung
88 Reduzierung Drücke der Reibbremsen
89 Entlüftungsphase
90 Erzeugung Bremsung
92 Aktivierung Reibbremsen
93 Brems- und/oder Druckhaltephase
94 weitere Detektion eines Blockierens der Räder
96 Erzeugung Vorschubdrehmoment
97 Vorschubdrehmoment
98 Lösung Reibbremsen

**Patentansprüche**

1. Verfahren (68) zum Betreiben eines Anhängerfahrzeugs (14) mit einem elektrischen Antrieb (24) und Reibbremsen (28), wobei das Verfahren (68) umfasst:

   - Ermitteln (74) einer Differenzmasse (72) zwischen einer ersten Masse (69) einer angetriebenen Achse (32) des Anhängerfahrzeugs (14) und einer zweiten Masse (71) einer nicht angetriebenen Achse (32) des Anhängerfahrzeugs (14), wobei die erste Masse (69) und die zweite Masse (71) jeweils die Massen der entsprechenden Achse selbst bezeichnen, ohne eine auf die Achse wirkende Masse zu umfassen;
   - Ermitteln eines Verzögerungsdrehmoments (54) in Abhängigkeit von der Differenzmasse (72),
   - Erzeugen mindestens oder genau des ermittelten Verzögerungsdrehmoments (54) mit dem elektrischen Antrieb (24) bei einem Aktivieren (92) der Reibbremsen (28).

2. Verfahren (68) nach Anspruch 1, wobei das Erzeugen des ermittelten Verzögerungsdrehmoments (54) während einer von einem Antiblockiersystem (23) erzeugten Brems- und/oder Druckhaltephase (93) erfolgt.

3. Verfahren (68) nach Anspruch 1 oder 2, wobei während einer Entlüftungsphase (89) das Verzögerungsdrehmoment (54) reduziert und im Fall, dass eine neue Brems- und/oder Druckhaltephase (93) von dem oder einem Antiblockiersystem (23) erzeugt wird, das Verzögerungsdrehmoment (54) wieder erzeugt wird.

4. Verfahren (68) nach einem der vorhergehenden Ansprüche, wobei das Verzögerungsdrehmoment (54) in Abhängigkeit von der Differenzmasse (72), der Erdbeschleunigung (76), einem dynamischen Reifenhalbmesser (78), und optional einer Neigung (80) des Anhängerfahrzeugs (14), ermittelt wird.

5. Verfahren (68) nach einem der vorhergehenden Ansprüche, wobei beim Detektieren eines blockierenden mit dem elektrischen Antrieb (24) angetriebenen Rades (30) ein Vorschubdrehmoment (97) erzeugt wird, bis das Rad (30) nicht mehr blockiert oder die Reibbremsen (28) erneut aktiviert werden.

6. Verfahren (68) nach einem der vorhergehenden Ansprüche, wobei das Erzeugen des Verzögerungsdrehmoments (54) mit dem elektrischen Antrieb (24) mittels einer Ansteuerung des elektrischen Antriebs (24) durch ein Anhängerbremssteuergerät (22) ausgeführt wird.

7. Anhängerbremssteuergerät (22), das eingerichtet ist, das Verfahren nach einem der Ansprüche 1 bis 6 auszuführen.

8. Anhängerbremssteuergerät (22) nach Anspruch 7, wobei das Anhängerbremssteuergerät (22) eingerichtet ist, einen elektrischen Antrieb (24) des Anhängerfahrzeugs (14) anzusteuern.

9. Anhängerfahrzeug (14) mit einem Anhängerbremssteuergerät (22) nach Anspruch 7 oder 8.

10. Anhängerfahrzeug (14) mit einem Anhängerbremssteuergerät (22) nach Anspruch 9 und einem elektrischen Antrieb (24) sowie Reibbremsen (28).

11. Anhängerfahrzeug (14) nach Anspruch 10, ferner umfassend ein, insbesondere elektronisches, Luftfedersystem (38).

12. Gespann (10), umfassend ein Zugfahrzeug (12) sowie ein Anhängerfahrzeug (14) nach einem der Ansprüche 9 bis 11.

**Claims**

1. Method (68) for operating a trailer vehicle (14) having an electric drive (24) and friction brakes (28), wherein the method (68) comprises:

- determining (74) a differential mass (72) between a first mass (69) of a driven axle (32) of the trailer vehicle (14) and a second mass (71) of a non-driven axle (32) of the trailer vehicle (14), wherein the first mass (69) and the second mass (71) each denote the masses of the corresponding axle itself, without including a mass acting on the axle;
- determining a deceleration torque (54) on the basis of the differential mass (72),
- generating at least or exactly the determined deceleration torque (54) with the electric drive (24) when the friction brakes (28) are activated (92).

**2.** Method (68) according to claim 1, wherein the generation of the determined deceleration torque (54) takes place during a braking and/or pressure holding phase (93) generated by an anti-lock braking system (23).

**3.** Method (68) according to claim 1 or 2, wherein, during a venting phase (89), the deceleration torque (54) is reduced, and the deceleration torque (54) is generated again if a new braking and/or pressure holding phase (93) is generated by the or an anti-lock braking system (23).

**4.** Method (68) according to any of the preceding claims, wherein the deceleration torque (54) is determined on the basis of the differential mass (72), the acceleration due to gravity (76), a dynamic tire radius (78), and optionally an inclination (80) of the trailer vehicle (14).

**5.** Method (68) according to any of the preceding claims, wherein, upon detection of a locking wheel (30) driven by the electric drive (24), a propulsion torque (97) is generated until the wheel (30) is no longer locked or the friction brakes (28) are reactivated.

**6.** Method (68) according to any of the preceding claims, wherein the generation of the deceleration torque (54) with the electric drive (24) is carried out by means of an actuation of the electric drive (24) by a trailer brake control unit (22).

**7.** Trailer brake control unit (22) which is configured to carry out the method according to any of claims 1 to 6.

**8.** Trailer brake control unit (22) according to claim 7, wherein the trailer brake control unit (22) is configured to actuate an electric drive (24) of the trailer vehicle (14).

**9.** Trailer vehicle (14) comprising a trailer brake control unit (22) according to claim 7 or 8.

**10.** Trailer vehicle (14) comprising a trailer brake control unit (22) according to claim 9 and an electric drive (24) and friction brakes (28).

**11.** Trailer vehicle (14) according to claim 10, further comprising an in particular electronic air suspension system (38).

**12.** Combination (10) comprising a towing vehicle (12) and a trailer vehicle (14) according to any of claims 9 to 11.

## Revendications

**1.** Procédé (68) permettant de faire fonctionner un véhicule remorqué (14) comportant un entraînement électrique (24) et des freins à friction (28), dans lequel le procédé (68) comprend :

- la détermination (74) d'une masse différentielle (72) entre une première masse (69) d'un essieu (32) entraîné du véhicule remorqué (14) et une seconde masse (71) d'un essieu (32) non entraîné du véhicule remorqué (14), dans lequel la première masse (69) et la seconde masse (71) désignent respectivement les masses de l'essieu correspondant lui-même, sans comprendre une masse agissant sur l'essieu ;
- la détermination d'un couple de rotation de décélération (54) en fonction de la masse différentielle (72),
- la génération d'au moins ou d'exactement le couple de rotation de décélération (54) déterminé avec l'entraînement électrique (24) lors d'une activation (92) des freins à friction (28).

**2.** Procédé (68) selon la revendication 1, dans lequel la génération du couple de rotation de décélération (54) déterminé est effectuée pendant une phase de freinage et/ou de maintien de pression (93) générée par un système antiblocage (23).

**3.** Procédé (68) selon la revendication 1 ou 2, dans lequel, pendant une phase d'évacuation de l'air (89), le couple de rotation de décélération (54) est réduit et, dans le cas où une phase de freinage et/ou de maintien de pression (93) est à nouveau générée par le ou un système antiblocage (23), le couple de rotation de décélération (54) est à nouveau généré.

**4.** Procédé (68) selon l'une des revendications précédentes, dans lequel le couple de rotation de décélération (54) est déterminé en fonction de la masse différentielle (72), de l'accélération de la pesanteur (76), d'un rayon dynamique de pneumatiques (78), et éventuellement d'une inclinaison (80) du véhicule remorqué (14).

**5.** Procédé (68) selon l'une des revendications précédentes, dans lequel, lors de la détection d'une roue (30) bloquée entraînée par l'entraînement électrique (24), un couple de rotation d'avance (97) est généré jusqu'à ce que la roue (30) ne soit plus bloquée ou que les freins à friction (28) soient réactivés.

**6.** Procédé (68) selon l'une des revendications précédentes, dans lequel la génération du couple de rotation de décélération (54) est mise en œuvre avec l'entraînement électrique (24) au moyen d'un dispositif de commande de l'entraînement électrique (24) par un appareil de commande de freinage de remorque (22).

**7.** Appareil de commande de freinage de remorque (22) configuré pour mettre en œuvre le procédé selon l'une des revendications 1 à 6.

**8.** Appareil de commande de freinage de remorque (22) selon la revendication 7, dans lequel l'appareil de commande de freinage de remorque (22) est configuré pour commander un entraînement électrique (24) du véhicule remorqué (14).

**9.** Véhicule remorqué (14) comportant un appareil de commande de freinage de remorque (22) selon la revendication 7 ou 8.

**10.** Véhicule remorqué (14) comportant un appareil de commande de freinage de remorque (22) selon la revendication 9 et un entraînement électrique (24) ainsi que des freins à friction (28).

**11.** Véhicule remorqué (14) selon la revendication 10, comprenant en outre un système de suspension pneumatique (38), en particulier électronique.

**12.** Attelage (10) comprenant un véhicule tracteur (12) ainsi qu'un véhicule remorqué (14) selon l'une des revendications 9 à 11.

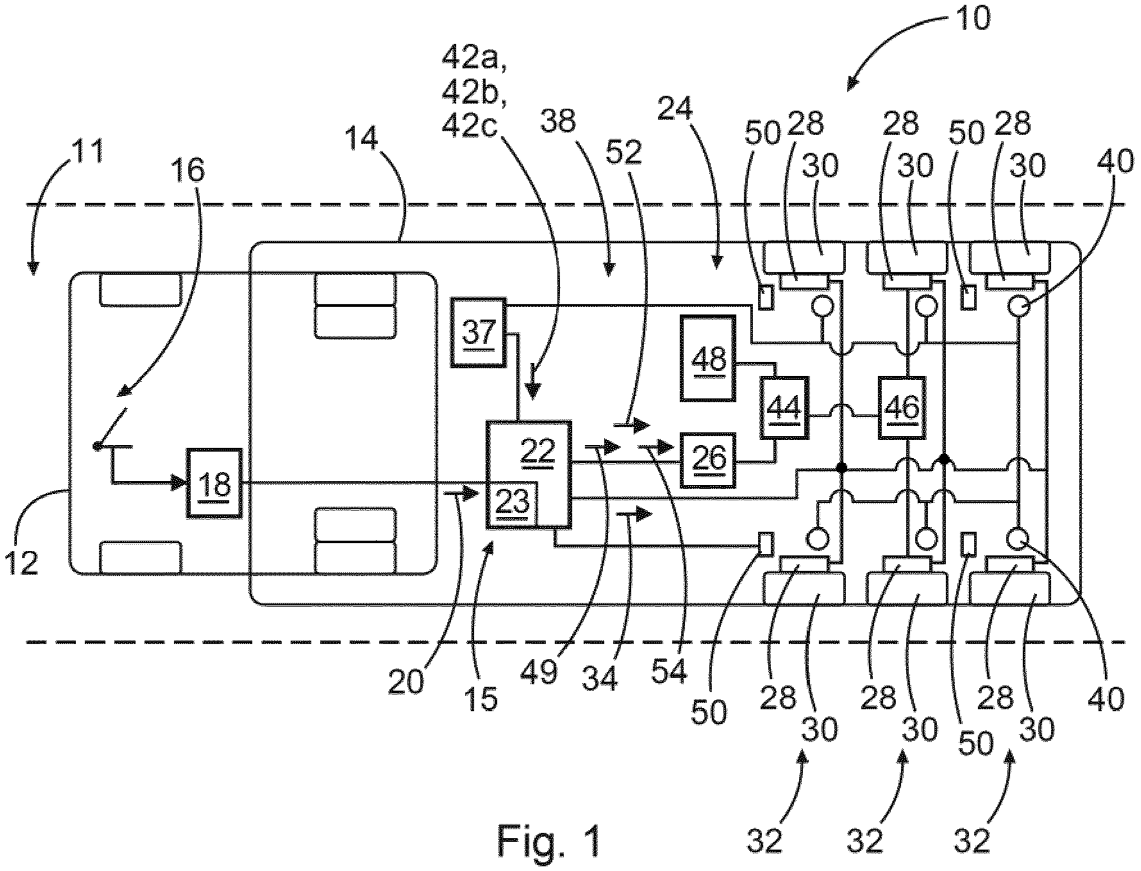
10
11
12
14
15
16
18
20
22
23
24
26
28
30
32
34
37
38
40
42a,
42b,
42c
44
46
48
49
50
52
54

Fig. 1

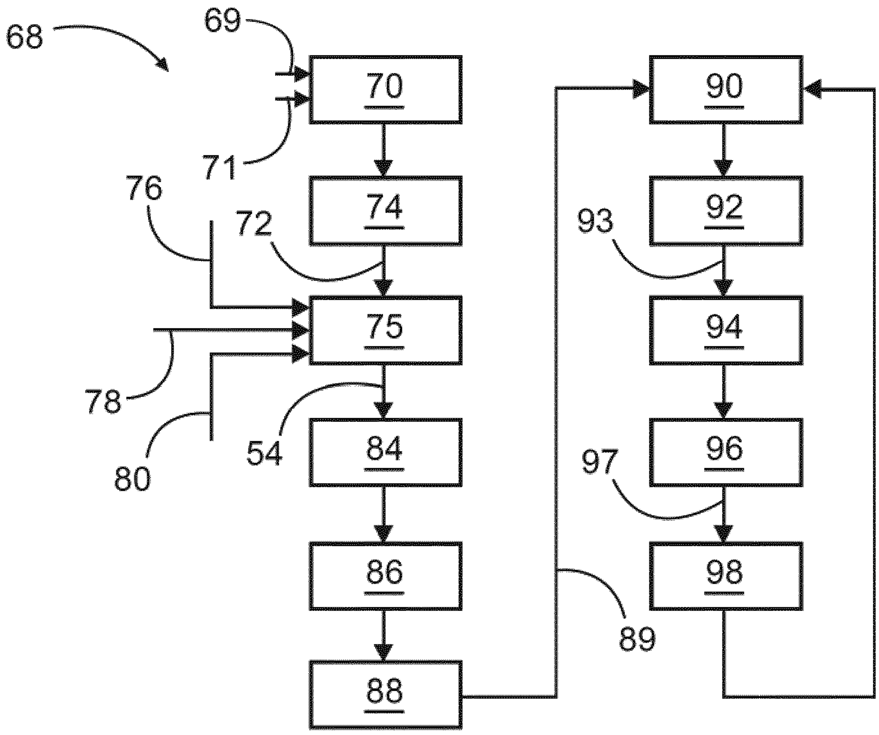
68
69
70
71
72
74
75
76
78
80
54
84
86
88
89
90
92
93
94
96
97
98

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102019119786 A1
- EP 2172378 A1
- EP 3381774 A1